# EUROPEAN PATENT SPECIFICATION

(11) **EP 3 725 952 B1**
(45) Date of publication and mention of the grant of the patent: **15.02.2023**
(21) Application number: 20169564.0
(22) Date of filing: 15.04.2020
(51) Int. Cl.: E02F 3/34, B62D 49/06, E02F 3/43, E02F 9/20, G05B 13/02, E02F 9/22

(54) **SYSTEMS AND METHODS FOR CONTROL OF A WORK VEHICLE**
SYSTEME UND VERFAHREN ZUR STEUERUNG EINES ARBEITSFAHRZEUGS
SYSTÈMES ET PROCÉDÉS DE COMMANDE D'UN VÉHICULE DE TRAVAIL

(30) Priority: 16.04.2019 US 201916386063
(43) Date of publication of application: 21.10.2020
(73) Proprietor: CNH Industrial Italia S.p.A., 10135 Torino (IT)
(72) Inventor: Lewis, Brady D., Peck, Kansas 67120 (US); Natzke, David R., Wichita, Kansas 67215 (US)
(74) Representative: CNH Industrial IP Department

(56) References cited:
- EP-A1- 0 768 433
- EP-A2- 3 339 516
- US-A- 6 061 617
- US-A1- 2016 347 321
- US-A1- 2017 284 316

## Description

### BACKGROUND

This disclosure relates generally to work vehicles, and more specifically, to systems and methods of controlling a work vehicle that is configured to couple to multiple different types of attachments.

A work vehicle, such as a tractor or a skid steer, may couple to different types of attachments (e.g., a loader assembly, a dozer assembly) to perform various functions as shown in patent applications EP3339516A1 and US20160347321A1. For example, the work vehicle may use or switch to the loader assembly to perform a wide variety of tasks, including construction, transportation of materials, excavation, landscaping, among others. The same work vehicle may use or switch to the dozer assembly to push around material, such as soil, sand, and rubble, among others. These attachments may be powered by an engine of the work vehicle, which operates a hydraulic pump configured to circulate a flow of fluid (e.g., hydraulic oil) through respective hydraulic circuit(s) of the loader assembly and the dozer assembly. In many cases, operation of the hydraulic circuit(s) for the loader assembly may be different from that for the dozer assembly. Therefore, complex and/or cumbersome maneuvers may be involved to operate different attachments of the work vehicle or to switch back and forth between different functions (e.g., the loader and dozer functions) of the work vehicle.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the disclosure. Indeed, the disclosure may encompass a variety of forms that may be similar to or different from the embodiments set forth below.

In one embodiment, a dual mode control system for a work vehicle includes a hydraulic system configured to drive a first attachment and a second attachment configured to couple to the work vehicle. The hydraulic system includes a hydraulic pump driven by an engine of the work vehicle and a fluid delivery system including a plurality of flow paths fluidly coupled to the hydraulic pump. The fluid delivery system is configured to receive a fluid flow from the hydraulic pump. The hydraulic system also includes a valve assembly that is coupled to the fluid delivery system and is configured to regulate diversion of the fluid flow into a first subset of the plurality of flow paths to drive the first attachment and into a second subset of the plurality of flow paths to drive the second attachment. The hydraulic system includes a controller that is operably coupled to the valve assembly and the engine. The controller is configured to receive an instruction to operate in a first mode to drive the first attachment or to operate in a second mode to drive the second attachment. In response to the instruction, the controller is configured to control the valve assembly to regulate the diversion of the fluid flow, select an operational profile for the engine that defines engine characteristics of the engine, and control the engine in accordance with the operational profile.

In another embodiment, a dual mode control system for a work vehicle includes a controller operably coupled to a valve assembly and an engine of the work vehicle. The controller is configured to determine an operating mode of the work vehicle based on an instruction received at the controller, where the operating mode includes a loader mode for operating a loader assembly or a dozer mode for operating a dozer assembly. The controller is also configured to control the valve assembly to regulate a fluid flow through a hydraulic system based on the operating mode of the work vehicle, select an operational profile for the engine based on the operating mode of the work vehicle, and operate the engine in accordance with the operational profile.

In another embodiment, a method for operating a work vehicle having a dual mode control system includes determining, via a controller, an operating mode of the work vehicle based on an instruction received at the controller, where the operating mode includes a loader mode for operating a loader assembly or a dozer mode for operating a dozer assembly. The method also includes controlling, via the controller, operation of a hydraulic system of the work vehicle based on the operating mode of the work vehicle. The method further includes selecting, via the controller, an operational profile for an engine of the work vehicle based on the operating mode of the work vehicle and operating, via the controller, the engine of the work vehicle in accordance with the operational profile.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic of a work vehicle, in accordance with an embodiment;
FIG. 2 is a schematic of a hydraulic control system of the work vehicle shown in FIG. 1, in accordance with an embodiment;
FIG. 3 is a schematic of another example of a hydraulic control system of the work vehicle shown in FIG. 2;
FIG. 4 is a flow chart illustrating a method for operating a work vehicle having the hydraulic control system shown in FIG. 2 or FIG. 3, in accordance with an embodiment; and
FIG. 5 is a schematic of an electronic control interface for operating the work vehicle shown in FIG. 1, in accordance with an embodiment.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

While dual functions of a work vehicle may be enabled by different attachments (e.g., a loader assembly, a dozer assembly), an operator may need to work with complex and/or cumbersome maneuvers to operate or switch back and forth between these functions. Therefore, it may be desirable to simplify the controls needed to operate different functions of the work vehicle, as well as reduce a complexity of hydraulic components needed to power hydraulic cylinders associated with the various attachments. Moreover, it may be desirable to adjust engine characteristics (e.g., operational parameters) of an engine of the work vehicle based on the type of attachment being operated by the work vehicle. Indeed, in certain cases, an engine power output that is suitable to enable effective operation of, for example, hydraulic cylinders of the loader assembly, may be different than an engine power output that is suitable to enable effective operation of hydraulic cylinders associated with the dozer assembly.

Accordingly, the presently disclosed embodiments include systems and methods for controlling a single hydraulic system that can be selectively switched to power components associated with different functions or modes of the work vehicle. In particular, the operator may use the same control feature (e.g., same joystick(s) or lever(s)) to operate particular components of the hydraulic system that enable the operator to maneuver the work vehicle in a loader mode or a dozer mode. Moreover, embodiments of the present disclosure include systems and methods for adjusting engine characteristics of an engine of the work vehicle based on the selected mode (e.g., loader mode, dozer mode) of the work vehicle. For example, the presently disclosed embodiments enable manual (e.g., via an operator-selectable input device) or automatic (e.g., via a controller) adjustment of certain engine characteristics to facilitate operation of the function being performed by the work vehicle. These and other features will be described in detail below with reference to the drawings.

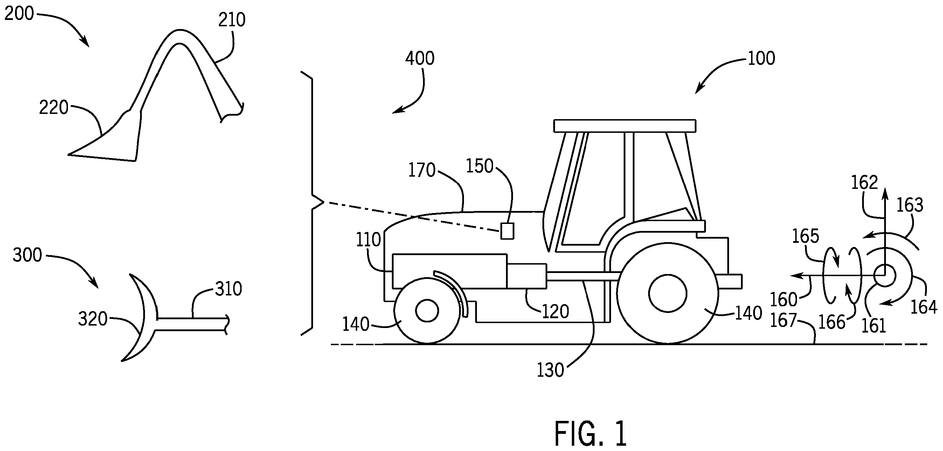

With the foregoing in mind, FIG. 1 is a diagram of a work vehicle 100 (e.g., a tractor), including an engine 110, a transmission assembly 120, a drive shaft 130, and wheels 140. The transmission assembly 120 is coupled to the engine 110 to transfer power from the engine 110 to the drive shaft 130, which powers the wheels 140 of the work vehicle 100. Further, the work vehicle 100 may be configured to couple to multiple different types of attachments, such as a loader assembly 200 and/or a dozer assembly 300, which are operable through a hydraulic control system 400, among other control systems (e.g., hydraulic and/or electrical control systems), of the work vehicle 100. As discussed in detail below, the engine 110 and/or the transmission assembly 120 may be coupled to one or more pumps (e.g., hydraulic pumps) of the hydraulic control system 400, which are configured to circulate hydraulic fluid (e.g., oil) through the hydraulic control system 400 to enable operation of the loader assembly 200 and/or the dozer assembly 300.

In some embodiments, the work vehicle 100 may include one or more sensors 150 (e.g., mechanical switch sensors) that are communicatively coupled to the hydraulic control system 400 and configured to detect coupling or attachment of the loader assembly 200 and/or the dozer assembly 300. As shown, the loader assembly 200 and the dozer assembly 300 may be described with reference to a forward axis 160, a transverse axis 161, a vertical axis 162, a first rotational direction 163 and a second rotational direction 164 with respect to the transverse axis 161, and a third rotational direction 165 and a fourth rotational direction 166 with respect to the forward axis 160.

In the illustrated embodiment, the loader assembly 200 includes one or more arms 210 that pivotally couple to a frame 170 of the work vehicle 100 and are rotatable with respect thereto by one or more hydraulic cylinders. For example, the one or more arms 210 may be raised or lowered with respect to a ground 167. The loader assembly 200 also includes, among other things, a material handling attachment such as a loader bucket 220 that is pivotally coupled to the one or more arms 210 and is rotatable with respect thereto by one or more hydraulic cylinders (e.g., additional hydraulic cylinders) of the hydraulic control system 400. For example, the one or more hydraulic cylinders may drive the loader bucket 220 to tilt or rotate in the first rotational direction 163 or the second rotational direction 164.

In the illustrated embodiment, the dozer assembly 300 includes one or more arms 310 that pivotally couple to the frame 170 of the work vehicle 100 and are rotatable with respect thereto by one or more hydraulic cylinders. For example, the one or more arms 310 may be raised or lowered with respect to the ground 167. The dozer assembly 300 also includes, among other things, a material handling attachment, such as a dozer blade 320, which is pivotally coupled to the one or more arms 310 and is rotatable with respect thereto by one or more hydraulic cylinders of the hydraulic control system 400. For example, the one or more hydraulic cylinders may drive the dozer blade 320 to tip or rotate in the third rotational direction 165 or the fourth rotational direction 166.

It should be appreciated that, in some embodiments, the one or more arms 310 of the dozer assembly 300 and the one or more arms 210 of the loader assembly 200 may be the same arm(s). That is, the loader bucket 220 and the dozer blade 320 may be removably coupled to the one or more arms 210 or the one or more arms 310. Further, in some embodiments, the loader bucket 220 and the dozer blade 320 may be the same material handling attachment. For example, in such embodiments, the loader bucket 220 may be used to excavate or transport material (e.g., soil, sand, rubble), as well as push materials across a surface of the ground 167 (e.g., operate as a dozer blade). In certain embodiments, the loader assembly 200 may be permanently coupled to the work vehicle 100 (e.g., a skid-steer loader) and the dozer assembly 300 may be removably coupled to the work vehicle 100. In some embodiments, both of the loader assembly 200 and the dozer assembly 300 are each removably coupled to the work vehicle 100.

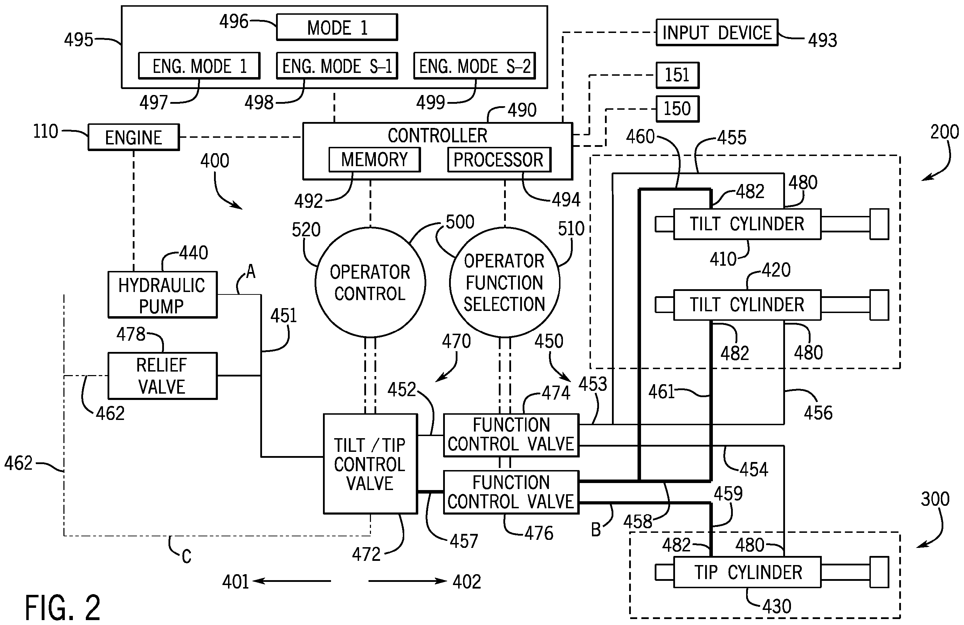

FIG. 2 is a schematic of an embodiment of the hydraulic control system 400 that may be used in the work vehicle 100 shown in FIG. 1. In the illustrated embodiment, the hydraulic control system 400 includes a first hydraulic cylinder 410 (e.g., a tilt cylinder) and a second hydraulic cylinder 420 (e.g., a tilt cylinder) configured to drive the loader bucket 220 of the loader assembly 200 (e.g., to tilt the loader bucket 220, such as in the first rotational direction 163 or the second rotational direction 164). The hydraulic control system 400 includes a third hydraulic cylinder 430 (e.g., a tip cylinder) configured to drive the dozer blade 320 of the dozer assembly 300 (e.g., to tip the dozer blade 320, such as in the third rotational direction 165 or the fourth rotational direction 166). The hydraulic control system 400 includes at least one hydraulic pump 440 configured to deliver a fluid (e.g., hydraulic fluid, oil) through a fluid delivery system 450 (e.g., a plurality of flow paths or conduits) to the first, second, and third hydraulic cylinders 410, 420, and 430. The hydraulic pump 440 may be directly coupled to the engine 110 (e.g., to a crankshaft of the engine 110) or indirectly coupled to the engine 110 (e.g., via the transmission assembly 120). Accordingly, the engine 110 may power or operate the hydraulic pump 440 and enable the hydraulic pump 440 to deliver hydraulic fluid to the first, second, and third hydraulic cylinders 410, 420, and 430.

The hydraulic control system 400 includes a controller 490 (e.g., electronic controller) that, as discussed in detail below, is configured to control various operational parameters of the hydraulic control system 400. In some embodiments, the controller 490 may also control certain engine characteristics of the engine 110 (e.g., a speed of the engine 110, an idle point of the engine 110, a power output of the engine 110, a torque curve of the engine 110) or other features of the work vehicle 100. In the illustrated embodiment, the hydraulic control system 400 includes a valve assembly 470 that includes a multiple valves coupled to the fluid delivery system 450 and configured to adjust or regulate flow parameters (e.g., on/off, flow pressure, flow volume, flow rate, flow direction) to the first, second, and third hydraulic cylinders 410, 420, and 430. The controller 490 may receive instructions to control the valve assembly 470 and thereby control the first, second, and third hydraulic cylinders 410, 420, and 430 to operate the loader bucket 220 and/or the dozer blade 320.

For example, as shown, the valve assembly 470 includes a first control valve 472, a second control valve 474, a third control valve 476, and a relief valve 478. It should be appreciated that a "control valve" may refer to any suitable type of control valve (e.g., spool valve) configured to adjust or regulate flow parameters (e.g., on/off position of the valve, flow pressure, flow volume, flow rate, flow direction) of hydraulic fluid within the fluid delivery system 450. Further, it should be understood that a "relief valve" may refer to any suitable type of relief valve that is configured to adjust or regulate the flow pressure and/or flow volume of hydraulic fluid within the fluid delivery system 450 and allow a pressurized fluid to flow out of the fluid delivery system 450 as to relieve pressure within conduits of the fluid delivery system 450.

For the purpose of discussion, components of the hydraulic control system 400 are referred to as disposed upstream (as indicated by an arrow 401) and downstream (as indicated by an arrow 402) with respect to the hydraulic pump 440. Different sections of the fluid delivery system 450 are labeled as line A, line B, and line C. Upstream of the first control valve 472, the line A couples the hydraulic pump 440 to the relief valve 478, and the line C couples the hydraulic pump 440, the line A, and the line B to the relief valve 478, such that the relief valve 478 may release pressurized fluid from the lines A or B in certain embodiments (e.g., neither of the loader assembly 200 and the dozer assembly 300 is in operation, over-pressurized fluid). Downstream of the first control valve 472, the fluid delivery system 450 splits into the line A and the line B. The line A delivers the fluid to first axial ends 480 of the first, second, and third hydraulic cylinders 410, 420, and 430. The line B delivers the fluid to second axial ends 482 of the first, second, and third hydraulic cylinders 410, 420, and 430.

The first control valve 472 and the second control valve 474 are disposed along the line A. The line A includes a flow path 451 between the hydraulic pump 440 and the first control valve 472, a flow path 452 between the first control valve 472 and the second control valve 474, flow paths 453 between the second control valve 474 and the first and second hydraulic cylinders 410 and 420 (e.g., for the loader assembly 200), and a flow path 454 between the second control valve 474 and the third hydraulic cylinder 430 (e.g., for the dozer assembly 300). The flow paths 453 may include a flow path 455 coupled to the first axial end 480 of the first hydraulic cylinder 410 and a flow path 456 coupled to the first axial end 480 of the second hydraulic cylinder 420.

The first control valve 472 and the third control valve 476 are disposed along the line B. The line B includes a flow path 457 between the first control valve 472 and the third control valve 476, flow paths 458 between the third control valve 476 and the first and second hydraulic cylinders 410 and 420 (e.g., for the loader assembly 200), and a flow path 459 between the third control valve 476 and the third hydraulic cylinder 430 (e.g., for the dozer assembly 300). The flow paths 458 may include a flow path 460 coupled to the second axial end 482 of the first hydraulic cylinder 410 and a flow path 461 coupled to the second axial end 482 of the second hydraulic cylinder 420. The relief valve 478 is disposed along the line C. The line C includes flow paths 462 coupling the hydraulic pump 440 to the relief valve 478 and coupling the line A and the line B (e.g., at the first control valve 472) to the relief valve 478.

The components of the hydraulic control system 400 are set up as described above such that the fluid (e.g., from one hydraulic pump 440) splits or diverts at the second and third control valves 474 and 476 (e.g., function control valves) based on a selected function or operational mode of the work vehicle 100. For example, when a loader function or a loader mode of the work vehicle 100 is selected (e.g., via an input device communicatively coupled to the controller 490), the valves 474 and 476 are controlled to a first position in which the fluid diverts (e.g., through a first subset of flow paths of the fluid delivery system 450) to the first and second hydraulic cylinders 410 and 420 (e.g., tilt cylinders) and is blocked from flowing into the third hydraulic cylinder 430. In contrast, when a dozer function or a dozer mode of the work vehicle 100 is selected, the valves 474 and 476 are controlled to a second position in which the fluid diverts (e.g., through a second subset of flow paths of the fluid delivery system 450) to the third hydraulic cylinder 430 (e.g., tip cylinder) and is blocked from flowing into the first and second hydraulic cylinders 410, 420. Accordingly, the valve 472 (e.g., tilt/tip control valve) may be used to control both the tilt function of the loader assembly 200 and the tip function of the dozer assembly 300 (e.g., based on the selected mode of the work vehicle 100), thereby simplifying the controls or maneuvers used to operate different functions of the work vehicle 100.

As discussed in detail below, the controller 490 may be configured to adjust engine characteristics of the engine 110 (e.g., operational parameters, such as an operational speed of the engine 110, an idle point of the engine 110, a power output of the engine 110) based on and/or in response to the selected mode (e.g., loader mode, dozer mode) of the work vehicle 100. In particular, the controller 490 may store various engine profiles (e.g., engine settings, engine control modes) that are associated with the loader mode of the work vehicle 100 or the dozer mode of the work vehicle 100 and may be configured to control (e.g., operate) the engine 110 in accordance with a corresponding one of the engine profiles upon receiving signals/instructions to operate the work vehicle 100 in the loader mode or the dozer mode. For conciseness, an engine profile or engine control mode associated with the loader mode of the work vehicle 100 will be referred to herein as a "loader engine profile," while an engine profile or engine control mode associated with the dozer mode of the work vehicle 100 will be referred to herein as a "dozer engine profile." The loader engine profile may be tailored to facilitate effective operation of the first and second hydraulic cylinders 410, 420, while the dozer engine profile may be tailored to enable effective operation of the third hydraulic cylinder 430. That is, operation of the engine 110 in accordance with the loader engine profile or the dozer engine profile may enable the hydraulic pump 440 to supply the first and second hydraulic cylinders 410, 420 or the third hydraulic cylinder 430 with a flow rate or a flow pressure of hydraulic fluid that is adequate and/or appropriate to enable responsive and effective operation of these hydraulic cylinders 410, 420, 430. Accordingly, the controller 490 may improve loader functions or dozer functions of the work vehicle 100 by instructing the engine 110 to selectively operate in accordance with the loader engine profile or the dozer engine profile, respectively.

In the illustrated embodiment, the controller 490 includes a memory 492 (e.g., a non-transitory computer-readable medium/memory circuitry) storing one or more sets of instructions (e.g., processor-executable instructions) that may be implemented to operate the valve assembly 470 and/or to control the engine characteristics of the engine 110. For example, the controller 490 may receive instructions to control the valve assembly 470 and thereby control the first and second hydraulic cylinders 410 and 420 (e.g., for the loader assembly 200, for the loader mode) and/or control the third hydraulic cylinder 430 (e.g., for the dozer assembly 300, for the dozer mode). The controller 490 also includes one or more processors 494 configured to access and execute the one or more sets of instructions encoded on the memory 492 (e.g., to control the valve assembly 470 and/or the engine 110). For example, the memory 492 may include volatile memory, such as random access memory (RAM), and/or non-volatile memory, such as read-only memory (ROM), optical drives, hard disc drives, or solid-state drives. In some embodiments, the memory 492 may store the engine characteristics associated with the loader engine profile and the engine characteristics associated with the dozer engine profile. Additionally, the one or more processors 494 may include one or more application specific integrated circuits (ASICs), one or more field programmable gate arrays (FPGAs), one or more general purpose processors, or any combination thereof. Furthermore, the term processor is not limited to just those integrated circuits referred to in the art as processors, but broadly refers to computers, processors, microcontrollers, microcomputers, programmable logic controllers, application specific integrated circuits, and other programmable circuits.

The controller 490 may be communicatively coupled to one or more user interfaces 500. The one or more user interfaces 500 may include graphical user interface(s), touch screen(s), push button(s), control panel(s), joystick(s), lever(s), or any other types of interfaces provided in the work vehicle 100 to allow a user or an operator to communicate instructions, inputs, or signals corresponding to commands to the controller 490 to control the valve assembly 470. It may be appreciated that the one or more user interfaces 500 may be dedicated interface(s) for the hydraulic control system 400 or may be general interface(s) for the work vehicle 100. For example, the one or more user interfaces 500 may be configured to input instructions/commands to control the operation of the hydraulic control system 400, to control operation of the engine 110, and/or to control operation of various other components and systems of the work vehicle 100. Further, the controller 490 may be communicatively coupled to the one or more sensors 150 (e.g., mechanical switch sensors) that are configured to detect the attachment or coupling of the loader assembly 200 and/or the attachment of the dozer assembly 300. For example, the controller 490 may determine that the loader assembly 200 and/or the dozer assembly 300 is attached based on signals generated by and received from the one or more sensors 150. The controller 490 may then operate the valve assembly 470 and/or control the engine characteristics of the engine 110 based on whether the loader assembly 200 or the dozer assembly 300 is attached to the work vehicle 100.

In some embodiments, the one or more user interfaces 500 include a first user interface 510 (e.g., a push button, a panel, a touch screen) configured to provide signals/instructions relating to a selected mode (e.g., loader mode, dozer mode) of the work vehicle 100, and include a second user interface 520 (e.g., joystick(s), handgrip(s), lever(s)) configured to provide signals/instructions relating to operation of the loader bucket 220 and/or the dozer blade 320. Accordingly, in some embodiments, the first user interface 510 is configured to provide signals/instructions relating to operation of the second and third control valves 474 and 476 (e.g., to control the valves 474 and 476), and the second user interface 520 is configured to provide signals/instructions relating to operation of the first control valve 472 (e.g., to control the valve 472).

In operation, the controller 490 may instruct the valve assembly 470 to change parameters (e.g., open/close positions, flow pressure, flow volume, flow rate, flow direction) of respective control valves to drive respective hydraulic cylinder(s) to move (e.g., tilt) the loader bucket 220 or move (e.g., tip) the dozer blade 320. For example, upon receiving inputs from the one or more user interfaces 500 (e.g., operator inputs) and/or the one or more sensors 150 to operate the work vehicle 100 in the loader mode, the controller 490 may adjust parameters of the first, second, and third control valves 472, 474, and 476 accordingly so that the fluid flows from the hydraulic pump 440 through flow paths 451, 452, and 453 and/or flow paths 451, 457, and 458 to drive the first hydraulic cylinder 410 and/or the second hydraulic cylinder 420 to adjust the loader bucket 220. That is, the controller 490 may adjust parameters of the first, second, and third control valves 472, 474, and 476 to divert the fluid to a first subset (e.g., the flow paths 451, 452, and 453 and/or the flow paths 451, 457, and 458) of the flow paths of the fluid delivery system 450 in response to receiving inputs to operate the work vehicle 100 in the loader mode. In some embodiments, the first hydraulic cylinder 410 is configured to tilt the loader bucket 220 in either the first rotational direction 163 or the second rotational direction 164. The fluid flow pressure, flow volume, and/or flow rate through the flow path 455 into the first axial end 480 may be greater than the fluid flow pressure, flow volume, and/or flow rate through the flow path 460 into the second axial end 482 to drive the first hydraulic cylinder 410 to tilt the loader bucket 220 in the first rotational direction 163, and vice versa.

Upon receiving inputs from the one or more interfaces 500 and/or the one or more sensors 150 to operate the work vehicle in the dozer mode, the controller 490 may adjust parameters of the first, second, and third control valves 472, 474, and 476 accordingly so that the fluid flows from the hydraulic pump 440 through flow paths 451, 452, and 454 and/or flow paths 451, 457, and 459 to drive the third hydraulic cylinder 430 to adjust the dozer blade 320. That is, the controller 490 may adjust parameters of the first, second, and third control valves 472, 474, and 476 to divert the fluid to a second subset (e.g., the flow paths 451, 452, and 454 and/or the flow paths 451, 457, and 459) of the flow paths of the fluid delivery system 450 in response to receiving inputs to operate the work vehicle 100 in the dozer mode. In some embodiments, the third hydraulic cylinder 430 is configured to tip the dozer blade 320 in either the third rotational direction 165 or the fourth rotational direction 166. The fluid flow pressure, flow volume, and/or flow rate through the flow path 454 into the first axial end 480 may be greater than the fluid flow pressure, flow volume, and/or flow rate through the flow path 459 into the second axial end 482 to drive the third hydraulic cylinder 430 to tip the dozer blade 320 in the third rotational direction 165, and vice versa.

Thus, in operation, an operator input at the first user interface 510 (e.g., to select a loader mode or a dozer mode) or a signal from the sensor 150 indicative of the type of attachment and/or indicative of the presence or absence of a certain attachment (e.g., loader bucket 220, dozer blade 320) may cause the controller 490 to control the valves 474 and 476. For example, selection of the dozer mode may cause the controller 490 to control the valves 474 and 476 to one position in which the valves 474 and 476 enable fluid flow toward the third hydraulic cylinder 430 and block fluid flow toward the first and second hydraulic cylinders 410 and 420. In some embodiments, selection of the loader mode may cause the controller 490 to control the valves 474 and 476 to another position in which the valves 474 and 476 enable fluid flow toward the first and second hydraulic cylinders 410 and 420 and block fluid flow toward the third hydraulic cylinder 430. Subsequently, the valve 472 may be controlled (e.g., via an operator interaction or input at the second user interface 520) to adjust fluid flow from the hydraulic pump 440 to the lines 452, 457 to thereby adjust the loader bucket 220 or the dozer blade 320 (e.g., depending on the position of the valves 474 and 476).

Upon receiving signals indicative of the selection of the loader mode or the dozer mode (e.g., via an operator input at the first user interface 510, via feedback from the one or more sensors 150), the controller 490 may adjust operation of the engine 110 to facilitate function of the hydraulic control system 400 in the selected mode of the work vehicle 100. More specifically, the controller 490 may instruct the engine 110 to operate in accordance with the loader engine profile when the loader mode of the work vehicle 100 is selected and may instruct the engine 110 to operate in accordance with the dozer engine profile when the dozer mode of the work vehicle 100 is selected. The loader engine profile and the dozer engine profile may each define, control, and/or constrain certain engine characteristics of the engine 110. As an example, such engine characteristics may include a torque curve of the engine 110 (e.g., a shape or a profile of the torque curve), an idle point of the engine 110 (e.g., a minimum rotational speed of the engine 110), a maximum rotational speed setpoint of the engine 110, a power output rating of the engine 110 (e.g., an upper horsepower setpoint or upper torque setpoint of the engine 110), a number of active or operational cylinders of the engine 110 (e.g., a quantity of cylinders injected with fuel or receiving an ignition spark), and/or any other suitable operational parameters of the engine 110. It should be appreciated that, in some embodiments, the controller 490 may be configured to directly control features of the engine 110 (e.g., fuel injection parameters, ignition parameters) to adjust the aforementioned engine characteristics and operate the engine 110 in accordance with the loader engine profile or the dozer engine profile. In other embodiments, the controller 490 may be configured to instruct an engine control unit (ECU) of the engine 110 to selectively adjust such control features of the engine 110.

In some embodiments, the particular engine characteristics associated with the loader engine profile and the dozer engine profile may be previously determined (e.g., via empirical data, via computer simulation techniques) to enhance operation of the work vehicle 100 in the loader mode or the dozer mode, respectively. For example, in the loader mode, it may be desirable for the hydraulic pump 440 to supply a relatively large flow volume, flow rate, and/or flow pressure of hydraulic fluid to the first and second hydraulic cylinders 410, 420 to enable movement (e.g., tilting) of the loader bucket 220 (e.g., as compared to a flow volume, flow rate, and/or flow pressure of hydraulic fluid involved to effectively actuate the third hydraulic cylinder 430 in the dozer mode). Accordingly, the loader engine profile may be tailored to enable the engine 110 to provide a relatively large power output, such that the engine 110 may effectively power the hydraulic pump 440 at a capacity that is suitable to deliver an elevated flow volume, flow rate, and/or flow pressure of hydraulic fluid to the first and second hydraulic cylinders 410, 420.

For example, operation of the engine 110 in accordance with the loader engine profile may cause the engine 110 to include a steep engine torque curve, a relatively high idle point, a relatively high maximum rotational speed setpoint, a relatively high upper horsepower setpoint or upper torque setpoint (e.g., power output), or any combination thereof (e.g., as compared to the dozer engine profile). As such, the engine 110 may adequately power the hydraulic pump 440 to enable supply of hydraulic fluid to the first and second hydraulic cylinders 410, 420 at a flow volume, flow rate, and/or flow pressure that is sufficient to enable responsive actuation of the first and second hydraulic cylinders 410, 412. Therefore, operator inputs at the second user interface 520 (e.g., to control the loader bucket 220) may result in responsive and substantially real-time movement of the loader bucket 220. Moreover, operation of the engine 110 in accordance with the loader engine profile may enable the engine 110 to increase an acceleration rate, a steering response rate, and/or other rate of movement of the work vehicle 100, and/or increase an upper traveling speed threshold of the work vehicle 100 (e.g., as compared to the dozer engine profile). In this manner, the controller 490 may improve an agility of the work vehicle 100 during operation of the work vehicle 100 in the loader mode.

In some embodiments, supply of a relatively low flow volume, flow rate, and/or flow pressure of hydraulic fluid to the third hydraulic cylinder 430 may be adequate to enable responsive operation of the dozer blade 320 during operation of the work vehicle 100 in the dozer mode (e.g., as compared to a flow volume, flow rate, and/or flow pressure of hydraulic fluid supplied to the first and second hydraulic cylinders 410, 420 to enable effective operation of the loader bucket 220). Therefore, when receiving inputs/signals (e.g., from the first user interface 510, from the one or more sensors 150) to operate the work vehicle 100 in the dozer mode, the controller 490 may automatically switch to operate the engine 110 in accordance with the dozer engine profile. When operating in accordance with the dozer engine profile, the engine 110 may be configured to include a include a shallow engine torque curve, a relatively low idle point, a relatively low maximum rotational speed setpoint, a relatively low upper horsepower setpoint or upper torque setpoint (e.g., power output), or any combination thereof (e.g., as compared to the loader engine profile). By adjusting operation of the engine 110 from a high power mode (e.g., the loader engine profile) to a low power mode (e.g., the dozer engine profile) when switching functions of the work vehicle 100 from the loader mode to the dozer mode, the controller 490 may improve an overall operational efficiency (e.g., reduce an engine fuel consumption) of the work vehicle 100 during operation of the work vehicle 100 in the dozer mode, where a relatively low power output of the engine 110 may be adequate to enable effective operation of the work vehicle 100. Indeed, operation of the engine 110 in accordance with the dozer engine profile may affect certain operational characteristics of the work vehicle 100 (e.g., an acceleration rate of the work vehicle 100, a steering response rate of the work vehicle 100, an upper traveling speed threshold of the work vehicle 100) to improve an efficiency of the work vehicle 100.

Although the controller 490 has been described as automatically adjusting the engine profile of the engine 110 in response to receiving input/signals indicative of the operational mode (e.g., loader mode, dozer mode) of the work vehicle 100, it should be noted that in certain embodiments, the operator may manually instruct the controller 490 to operate the engine 110 in accordance with a particular engine profile (e.g., the loader engine profile, the dozer engine profile). For example, in such embodiments, the hydraulic control system 400 may include an input device 493 (e.g., a toggle switch) that is communicatively coupled to the controller 490 and configured to enable the operator to manually select an operational mode or control mode (e.g., the loader engine profile, the dozer engine profile) for the engine 110. In other words, the input device 493 may enable the operator to instruct the engine 110 to operate in accordance with the loader engine profile (e.g., a high power mode) or in accordance with the dozer engine profile (e.g., a low power mode) irrespective of whether the work vehicle 100 is operating in the loader mode or the dozer mode. Accordingly, the operator may select a particular power output range of the engine 110 based on the task (e.g., transportation, excavation, bulldozing) being performed by the work vehicle 100. In some embodiments, the input device 493 may be integrated with the first user interface 510. That is, the input device 493 may include a push button or a panel of the first user interface 510.

In some embodiments, the controller 490 may be communicatively coupled to a display device (e.g., a touchscreen or other display device), referred to herein as a screen 495, which may enable the operator to select various intermediate engine profiles that may be subsets of the loader engine profile or the dozer engine profile. For example, the screen 495 may be configured to display various operational parameters of the work vehicle 100, such as an operational mode (e.g., the loader mode, the dozer mode) of the work vehicle 100 and/or a current engine control mode (e.g., the loader engine profile, the dozer engine profile) of the engine 110. Particularly, the screen 495 may display the selected operational mode of the work vehicle 100 in a first display field 496. In the illustrated embodiment, the loader mode of the work vehicle 100 is selected, which is represented as "Mode 1" in the first display field 496. The screen 495 may display the current engine control profile of the engine 110 in a second display field 497. For example, in the illustrated embodiment, the controller 490 is configured to operate the engine 110 in accordance with the loader engine profile, which may be displayed in the second display field 497 as "Eng. Mode 1."

The screen 495 may display various additional selectable engine profiles that may be included as sub-modes of the currently selected engine profile. Particularly, in the illustrated embodiment, the screen 495 may display a first selectable engine sub-mode (e.g., a first sub-mode of the loader engine profile), represented as "Eng. Mode S-1," within a third display field 498, and may display a second selectable engine sub-mode (e.g., a second sub-mode of the loader engine profile), represented as "Eng. Mode S-2," within a fourth display field 499. Certain engine characteristics associated with these first and second engine sub-modes may be different than the engine characteristics defined by the loader engine profile. For example, the first and second engine sub-modes may include different torque curves (e.g., different torque curve profiles), idle points, maximum engine rotational speed setpoints, upper horsepower setpoints, and/or upper torque setpoints than the loader engine profile. Indeed, in some embodiments, the first and second engine sub-mode may be associated with engine settings that are fine-tuned (e.g., via empirical data) to facilitate loader functions or dozer functions in particular working environments (e.g., weather conditions, ground compositions, terrain features). The operator may instruct the controller 490 to control the engine 110 in accordance with a particular engine profile or sub mode by selecting one of the display fields 497, 498, or 499 (e.g., via touching of the screen 495) associated with the engine profile or sub-mode. In some embodiments, the screen 495 may display the most suitable working environment(s) associated with each of the displayed engine profiles and/or sub-modes, thereby facilitating operator selection of a particular engine profile or sub-mode.

In certain embodiments, the screen 495 may enable the operator to adjust certain engine characteristics associated with the loader engine profile, the dozer engine profile, or the corresponding engine sub-modes. That is, the operator may modify (e.g., adjust or customize) any of the aforementioned engine characteristics of the engine profiles or sub-modes. For example, a graphical user interface (GUI) of the screen 495 may be configured to enable the operator to modify the torque curve (e.g., a shape of torque curves), the idle point, the power output, the maximum engine rotational speed setpoint, the upper horsepower setpoint, and/or the upper torque setpoint defined by each of the engine profiles or sub-modes. The GUI may enable the operator to save such modifications to the corresponding engine profiles (e.g., on the memory 492), thereby enabling the controller 490 to operate the engine 110 in accordance with the updated or modified engine profiles or sub-modes during subsequent operation of the work vehicle 100. It should be appreciate that, in some embodiments, the screen 495 may be integrally formed with the first user interface 510 or included as a component of the first user interface 510. In other embodiments, the screen 495 may be a suitable display, touchscreen, or other input device (e.g., switches, push buttons) that is separate from the first user interface 510.

In some embodiments, the controller 490 may be configured to switch a control mode of the engine 110 from the loader engine profile to the dozer engine profile, or vice versa, (or between sub-modes), based on sensor feedback received from one or more auxiliary sensors 151 of the work vehicle 100, which are configured to measure various operational parameters of the work vehicle 100 and/or characteristics of the working environment (e.g., ambient temperature, weather conditions, ground compositions, terrain features) surrounding the work vehicle 100. For example, in some embodiments, the one or more auxiliary sensors 151 may be configured to measure fluid characteristics (e.g., flow rate, flow pressure, flow volume, temperature) of the hydraulic fluid circulating through certain portions of the fluid delivery system 450, such as the lines A, B, and C, the hydraulic pump 440, and/or the relief valve 478. The controller 490 may be configured to adjust the operational mode of the engine 110 when one or more of the monitored hydraulic fluid characteristics deviate from a target value (e.g., an expected value for the control mode of the engine 110) by a threshold amount (e.g., a percentage of the target value, such as equal to or greater than 5, 10, 15, 20, or 25 percent). For example, if the controller 490 is operating the engine 110 in accordance with the dozer engine profile (e.g., a low power mode), and the measured flow rate of hydraulic fluid circulating through the hydraulic pump 440 falls below a target value (e.g., due to bog of the engine 110), the controller 490 may temporarily switch the operational mode of the engine 110 to the loader engine profile (e.g., a high power mode) or to a sub-mode (e.g., a high power sub-mode). Accordingly, the controller 490 may increase a power output of the engine 110 (e.g., increase fuel injection into the engine 110) to enable the engine 110 to adequately power the hydraulic pump 440 at a capacity that provides the desired target flow rate of hydraulic fluid to the fluid delivery system 450. In some embodiments, the controller 490 may instruct the engine 110 to resume operation in accordance with originally selected engine profile (e.g., in accordance with the dozer engine profile) when an actual flow rate of hydraulic fluid provided by the hydraulic pump 440 is substantially equal (e.g., within a threshold percentage of) to the target flow rate of hydraulic fluid.

In some embodiments, the one or more auxiliary sensors 151 may be configured to provide the controller 490 with feedback indicative of a coolant temperature of the engine 110, an oil temperature of the engine 110, a fuel consumption rate of the engine 110, and/or other suitable engine characteristics of the engine 110. The controller 490 may be configured to adjust the operational mode of the engine 110 in accordance with the techniques discussed above when one or more of the monitored engine characteristics deviate from a respective target value (e.g., an expected value for the control mode of the engine 110) by a threshold amount (e.g., a percentage of the target value, such as equal to or greater than 5, 10, 15, 20, or 25 percent). For example, the controller 490 may be configured to switch the operational mode of the engine 110 from the loader engine profile to the dozer engine profile, or vice versa, when a coolant temperature of the engine 110, an oil temperature of the engine 110, and/or a fuel consumption rate of the engine 110 exceed respective target values by the threshold amount.

It should be understood that the controller 490 may be configured to switch the current engine profile of the engine 110 (e.g., from the loader engine profile to the dozer engine profile or vice versa, or to various sub-modes) based on a determination that any other operational parameter(s) of the work vehicle 100 (e.g., measured by the one or more auxiliary sensors 151) deviate from respective target values by a threshold amount. Such operational parameters may include a rotational speed of the wheels 140, an operational speed of the engine 110, a desired ground speed of the work vehicle 100, or any combination thereof. For example, if the controller 490 is currently operating the engine 110 in accordance with the dozer engine profile and the controller 490 determines that a desired rotational speed of the wheels 140, a desired operational speed of the engine 110, and/or a desired ground speed of the work vehicle 100 falls below a corresponding target value, then the controller 490 may switch the operational mode of the engine 110 to the loader engine profile. The controller 490 may resume operation of the engine 110 in accordance with the dozer engine profile upon a determination that the rotational speed of the wheels 140, the operational speed of the engine 110, and/or the ground speed of the work vehicle 100 are substantially similar (e.g., within 5, 10, 15, 20, or 25 percent of) their respective target values. In some embodiments, the controller 490 may be configured to generate a message on the screen 495 that notifies the operator when the engine profile is automatically switched from the loader engine profile to the dozer engine profile, or vice versa. In some embodiments, the operator may disable (e.g., via input through a GUI of the screen 495) the controller 490 from automatically switching between the loader engine profile and the dozer engine profile based on the sensor feedback acquired by the one or more auxiliary sensors 151.

In further embodiments, the controller 490 may be configured to dynamically adjust certain engine characteristics associated with the loader engine profile or the dozer engine profile (e.g., instead of switching between the loader engine profile and the dozer engine profile) based on the sensor feedback received from the one or more auxiliary sensors 151. For example, in embodiments where the controller 490 operates the engine 110 in accordance with the dozer engine profile (e.g., a low power mode) and a rotational speed of the wheels 140 drops below a desired target value, the controller 490 may temporarily increase the power output level of the engine 110 (e.g., by increasing fuel injection into the engine 110) without switching the engine control profile to the loader engine profile. The controller 490 may resume operation of the engine 110 in accordance with the unmodified (e.g., pre-set) dozer engine profile upon a determination that the rotational speed of the wheels 140 is substantially similar (e.g., within a threshold percentage of) to the desired target rotational speed of the wheels 140.

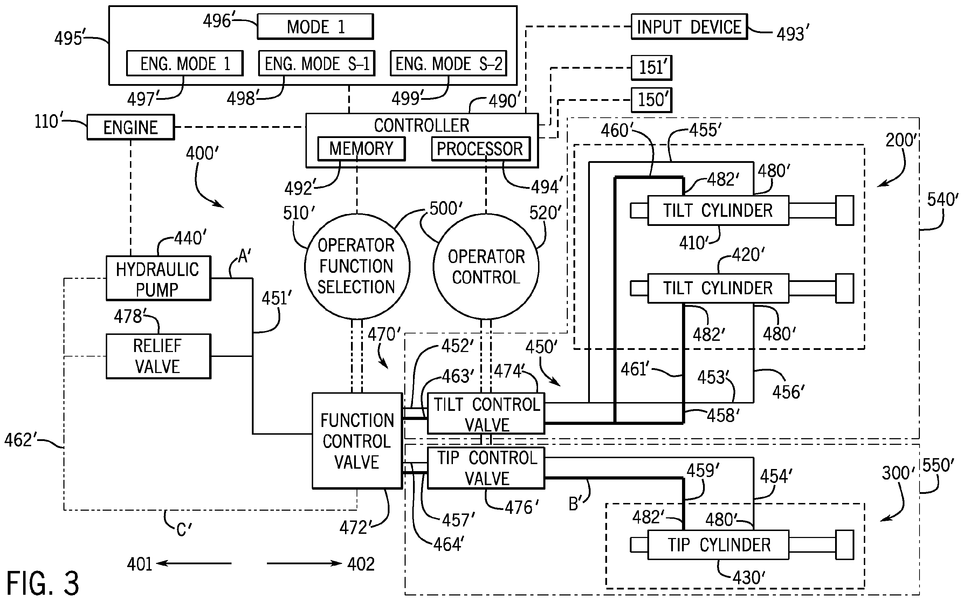

FIG. 3 is a schematic of a hydraulic control system 400' in accordance with an embodiment. As illustrated, the schematic of the hydraulic control system 400' in FIG. 3 may differ from that shown in FIG. 2 in that downstream of the first control valve 472', the fluid delivery system 450' splits into a first hydraulic system 540' and a second hydraulic system 550'. The first and the second hydraulic systems 540' and 550' each includes the line A' and the line B', wherein the line A' of the first hydraulic system 540' includes a flow path 463' coupling the first control valve 472' to the second control valve 474', and the line B' of the second hydraulic system 550' includes a flow path 464' coupling the first control valve 472' to the third control valve 476'. For the first hydraulic system 540', the flow paths 458' couple the first and second hydraulic cylinders 410' and 420' (e.g., for the loader assembly 200') to the second control valve 474'. For the second hydraulic system 550', the flow path 454' couples the third hydraulic cylinder 430' (e.g., for the dozer assembly 300') to the third control valve 476'.

Upon receiving inputs provided by the one or more interfaces 500' and/or the one or more sensors 150, the controller 490' may control the first control valve 472' so that the fluid flows from the hydraulic pump 440' to the first hydraulic system 540' to drive the first and second hydraulic cylinders 410' and 420' to move (e.g., tilt) the loader bucket 220, or the controller 490' may control the first control valve 472' so that the fluid flows from the hydraulic pump 440' to the second hydraulic system 550' to drive the third hydraulic cylinder 430' to move (e.g., tip) the dozer blade 320 in the manners set forth above. Accordingly, in this embodiment, the first user interface 510' is configured to provide signals/instructions relating to operation of the first control valve 472' (e.g., to control the valve 472'), and the second user interface 520' is configured to provide signals/instructions relating to operation of the second and third control valves 474' and 476' (e.g., to control the valves 474' and 476').

Thus, in operation, an operator input at the first user interface 510' (e.g., to select the loader mode or the dozer mode) or a signal from the sensor 150 may cause the controller 490' to control the valve 472'. For example, selection of the loader mode may cause the controller 490' to control the valve 472' to one position in which the valve 472' enables fluid flow toward the first and second hydraulic cylinders 410' and 420' (e.g., through a first subset of flow paths of the fluid delivery system 450') and blocks fluid flow toward the third hydraulic cylinder 430'. In some embodiments, selection of the dozer mode may cause the controller 490' to control the valve 472' to another position in which the valve 472' enables fluid flow toward the third hydraulic cylinder 430' (e.g., through a second subset of the flow paths of the fluid delivery system 450') and blocks fluid flow toward the first and second hydraulic cylinders 410' and 420'. Subsequently, the valves 474' and 476' may be controlled (e.g., via the second user interface 520') to adjust fluid flow to lines 453', 458', 454', and 459' to thereby adjust the loader bucket 220 or the dozer blade 320. It should be understood that the controller 490' of the hydraulic control system 400' may control the engine 110' in accordance with the techniques discussed above. That is, the controller 490' may control the engine 110' in accordance with the loader engine profile or the dozer engine profile based on selected operational mode (e.g., loader mode, dozer mode) of the work vehicle 100 and/or based on various measured operational parameters of the work vehicle 100 (e.g., as provided by the one or more auxiliary sensors 151). It should be understood that the features and operations described with respect to FIG. 2 may be used within the hydraulic system 400' of FIG. 3.

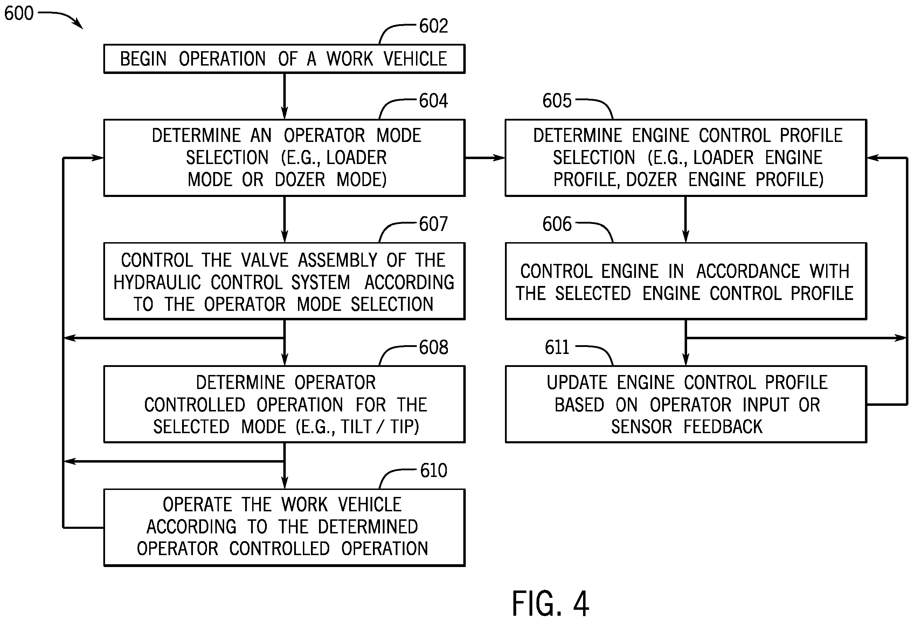

FIG. 4 is a flow chart illustrating a method 600 for operating the work vehicle 100 having the hydraulic control systems 400 and 400' shown in FIG. 2 or FIG. 3, respectively. One or more of the steps of the method 600 may be executed by the controller 490 (490') in any order. Certain steps of the method may be omitted and other steps may be added. The method 600 includes beginning operation of the work vehicle 100 (step 602) and determining an operator function selection (e.g., loader mode or dozer mode) (step 604). That is, upon beginning operation of the work vehicle 100, signal(s) or input(s) corresponding to the operation function selection may be fed to the controller 490 (490'), enabling determination of whether the loader mode or the dozer mode is selected. In some embodiments, the one or more user interfaces 500 (500') may be used or activated (e.g., by the operator) to select the work vehicle 100 operational mode, and signals/inputs corresponding to such selection are fed to the controller 490 (490'). For example, the operator may use the first user interface 510 (510') (e.g., a push button, a panel, a touch screen) or the second user interface 520 (520') (e.g., joystick(s), handgrip(s), lever(s)) communicatively coupled to the controller 490 (490') to select the loader mode or the dozer mode of the work vehicle 100. In certain embodiments, coupling or attachment of the loader assembly 200 (200') or the dozer assembly 300 (300') may be detected by the one or more sensors 150 (150') (e.g., mechanical switch sensors) and signal(s) corresponding to the detection may be automatically fed to the controller 490 (490'), such that the controller 490 (490') may determine that the dozer mode or the loader mode is selected.

The method 600 also includes determining an engine control profile selection (e.g., loader engine profile, dozer engine profile) for the work vehicle 100 (step 605). For example, in some embodiments, upon receiving signals/inputs indicative of the selected operational mode (e.g., the loader mode, the dozer mode) of the work vehicle 100, the controller 490 (490') may select an engine control profile (e.g., the loader engine profile, the dozer engine profile) corresponding to the identified operational mode, and may proceed to control the engine 110 in accordance with the selected engine control profile (step 606). For example, in some embodiments, upon receiving a command (e.g., via the first user interface 510, (510') or via the one or more sensors 150 (150')) to operate the work vehicle 100 in the loader mode, the controller 490 (490') may control the engine 110 (110') in accordance with the engine characteristics defined in the loader engine profile. Conversely, upon receiving a command to operate the work vehicle in the dozer mode, the controller 490 (490') may control the engine 110 (110') in accordance with the engine settings defined in the dozer engine profile. As noted above, in certain embodiments, the operator may manually (e.g., via inputs/signal provided via the input device 493) instruct the controller 490 (490') to control the engine 110 (110') in accordance with the loader engine profile or the dozer engine profile. In further embodiments, the controller 490 (490') and/or the operator may select a variety of sub-modes of engine operation (e.g., sub-modes of the loader engine profile, sub-modes the dozer engine profile) that may each include engine characteristics that are different than those included in the loader engine profile and/or the dozer engine profile.

In the illustrated embodiment, the method 600 includes controlling the valve assembly 470 (470') of the hydraulic control system 400 (400') according to the operator function selection (e.g., loader mode or dozer mode) (step 607). Once the operator function selection is made, parameters of the valve assembly 470 (470') are controlled to reflect on the selection and prepare the hydraulic control system 400 (400') for the selected function. In some embodiments, the controller 490 may change parameters (e.g., open/close positions) of the second and third control valves 474 and 476 to divert the pressurized fluid to the first and second hydraulic cylinders 410 and 420 of the loader assembly 200 if the loader mode is selected, or to divert the pressurized fluid to the third hydraulic cylinder 430 of the dozer assembly 300 if the dozer mode is selected (e.g., see FIG. 2). In some embodiments, the controller 490' may control parameters (e.g., open/close positions) of the first control valve 472' to divert the pressurized fluid to the first hydraulic system 540' (e.g., including the first and second hydraulic cylinders 410' and 420') if the loader mode is selected, or to divert the pressurized fluid to the second hydraulic system 550' (e.g., including the third hydraulic cylinder 430') if the dozer mode is selected (e.g., see FIG. 3).

The method 600 includes determining an operator controlled operation for the selected function (e.g., tilt/tip) (step 608). That is, once the valve assembly 470 (470') of the hydraulic control system 400 (400') is controlled for the selected function (e.g., loader mode or dozer mode), the controller 490 (490') further determines the specific operation to be performed. For example, the controller 490 (490') may determine flow parameters (e.g., on/off position of the valve, flow pressure, flow volume, flow rate, flow direction) for the respective control valves based on signal(s)/input(s) provided by the second user interface 520 (520') (e.g., joystick(s), handgrip(s), lever(s)). For example, the operator may maneuver the second user interface 520 (520') in different movements (e.g., left, right, forward, reverse) that cause the controller 490 (490') to control the valve assembly 479 (470') (e.g., valves 472' or valves 474' and 476') to adjust flow parameters into the respective hydraulic cylinders (e.g., the first and second hydraulic cylinders 410 (410') and 420 (420'), or the third hydraulic cylinder 430 (430')).

The method 600 includes operating the work vehicle 100 according to the determined operator controlled operation (step 610). Concurrent or substantially concurrent to determining the operator controlled operation, the controller 490 (490') also controls operation of the valve assembly 470 (470') to implement the determined flow parameters (e.g., on/off position of the valve, flow pressure, flow volume, flow rate, flow direction) for the respective valves to drive respective hydraulic cylinder(s) to move (e.g., tilt) the loader bucket 220 or move (e.g., tip) the dozer blade 320. It should be noted that at any point during the operation of the work vehicle 100 (e.g., steps 604 to 610), the operator mode selection (e.g., loader mode or dozer mode) may be updated or re-selected and the operation of the hydraulic control system 400 (400') may be updated accordingly. For example, to switch from the loader assembly 200 to the dozer assembly 300, the hydraulic control system 400 (400') may proceed to the operation discussed in the step 604 and subsequent operations followed, such that the operator may use the same control (e.g., the second user interface 520 (520')) to maneuver the work vehicle 100 for both loader and dozer modes. In particular, when the loader mode is selected, the operator may operate the second user interface 520 (520') (e.g., joystick(s), handgrip(s), lever(s)) in one movement to drive the first and second hydraulic cylinders 410 (410') and 420 (420') to move (e.g., tilt) the loader bucket 220 in a certain rotational direction. When the dozer mode is selected, operating the second user interface 520 (520') in the same manner (e.g., same movement) enables the operator to move (e.g., tip) the dozer blade 320 in a certain rotational direction.

Upon receiving signals/inputs to switch the operational mode of the work vehicle 100 from the loader mode to the dozer mode, or vice versa, the controller 490 (490') may concurrently or substantially concurrently update the engine control profile of the engine 110 (110') to reflect the changes in work vehicle 100 operational mode (step 611). For example, as discussed above, upon receiving a command (e.g., via the first user interface 510, (510'), via the one or more sensors 150, (150')) to transition an operational mode of the work vehicle 100 from the loader mode to the dozer mode, the controller 490 (490') may switch the engine control profile of the engine 110 (110') from the loader engine profile to the dozer engine profile. Conversely, upon receiving a command to transition an operational mode of the work vehicle 100 from the dozer mode to the loader mode, the controller 490 (490') may switch the engine control profile of the engine 110 (110') from the dozer engine profile to the loader engine profile. In this manner, the controller 490 (490') may ensure that an operation mode (e.g., an operational profile) of the engine 110 (110') is tailored to facilitate effective operation of the hydraulic control system 400 (400') in the mode of the work vehicle. Indeed, by powering the hydraulic pump 440 (440') at a capacity (e.g., an operational speed) that facilitates operation of the first and second hydraulic cylinders 410 (410'), 420 (420') or the third hydraulic cylinder 430 (430') when the work vehicle 100 is in the loader mode or the dozer mode, respectively, the engine 110 (110') may enable the hydraulic control system 400 (400') to improve a movement (e.g., tip, tilt) responsiveness of the loader bucket 220 or the dozer blade 320 when the operator manipulates the second user interface 520 (520'). In certain embodiments, the controller 490 (490') may also switch or update the engine control profile of the engine 110 (110') based on sensor feedback (e.g., measured by the one or more auxiliary sensors 151 (151')) indicative of one or more operational parameters of the work vehicle 100 (e.g., a rotational speed of the wheels 140, an operational speed of the engine 110, a desired ground speed of the work vehicle 100, a coolant temperature of the engine 110, an oil temperature of the engine 110, a fuel consumption rate of the engine 110) and/or characteristics of the working environment (e.g., an ambient temperature of the working environment) (step 611).

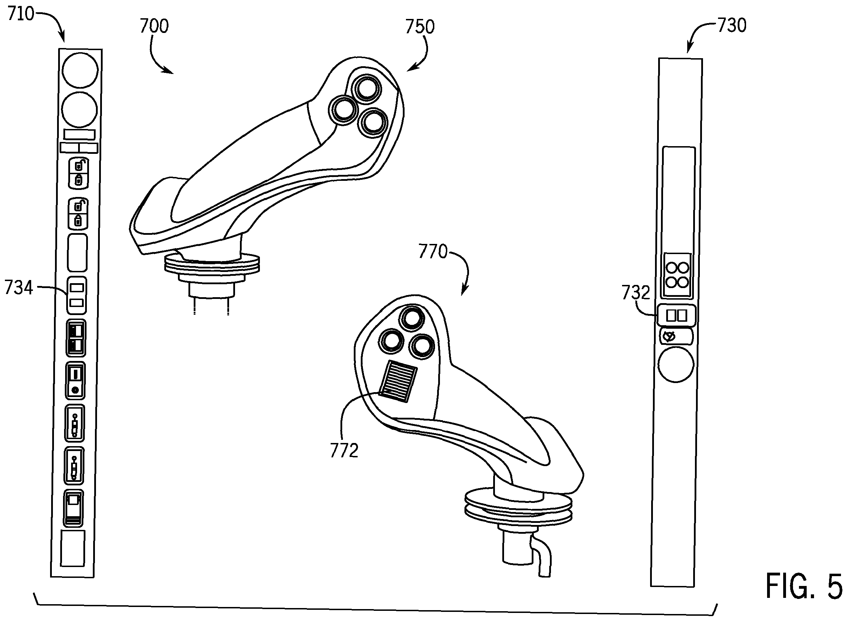

In certain embodiments, the hydraulic control system 400 (400') may be controlled electronically. For example, the valve assembly 470 (470') may be electronically controlled. In addition, other functions of the work vehicle 100 may also be electronically controlled, as shown in FIG. 5. FIG. 5 is a schematic of an electronic control interface 700 for operating the work vehicle 100, in accordance with an embodiment. In the illustrated embodiment, the electronic control interface 700 includes a first console 710, a second console 730, a first control grip or left-hand grip 750, and a second control grip or right-hand grip 770. Although it should be understood that the consoles, grips, and inputs (e.g., buttons, switches, etc.) may be arranged and distributed in any of a variety of manners. It may be appreciated that the electronic control interface 700 may enable operation of the work vehicle 100 in a similar matter as set forth for the one or more interfaces 500 (500'), the input device 493, and the screen 495. The electronic control interface 700 may be communicatively coupled to the controller (490, 490'), such that the electronic control interface 700 may facilitate switching back and forth between loader and dozer modes. In particular, the same control grips (e.g., the first and second control grips 750 and 770) and the same switches on the consoles (e.g., the first and second consoles 710 and 730) may be used to control the work vehicle 100 in either function (e.g., loader mode and dozer mode).

As shown, the second console 730 may include a switch 732 (e.g., toggle switch) configured to enable the operator to switch between using the first and second control grips 750 and 770 in a similar manner (e.g., similar maneuvers) for a standard control for a loader (e.g., skid-steer) and for a standard control for a bulldozer. In certain embodiments, if the switch 732 is toggled to the loader mode or function, the work vehicle 100 may function like a loader. For example, the first control grip 750 may control the direction and speed of the work vehicle 100, and the second control grip 770 may control the loader arm (e.g., arms 210) and loader bucket movement (e.g., bucket 220). In certain embodiments, if the switch 732 is toggled to the dozer mode or mode, the work vehicle 100 may function like a bulldozer. For example, the first control grip 750 may control the direction and speed of the work vehicle 100, and the second control grip 770 may control the dozer arm (e.g., arms 310) and the dozer blade movement (e.g., dozer blade 320). For example, a switch 772 (e.g., thumb wheel) may be used to control rotation of the loader bucket 220 while the switch 732 is in one position and to control rotation of the dozer blade 320 while the switch 732 is in another position. Herein, the arm movement may generally change the height of the loader bucket 220 or of the dozer blade 320, and the loader bucket movement and dozer blade movement may refer to tilting or tipping in different rotational directions, as discussed above. Further, it should be appreciated that each of the first console 710, the second console 730, the first control grip 750, and the second control grip 770 may include a plurality of switches and/or buttons, and the specific function of the switches and/or buttons may correlate with the function or mode (e.g., loader mode, dozer mode) selected with the switch 732. In some embodiments, the first console 710 or the second console 730 may include an additional input device 734 (e.g., the input device 493, the screen 495), which may enable the operator to manually select particular engine profiles or engine settings (e.g., the loader engine profile, the dozer engine profile, and sub-modes thereof) for control of the engine 110 (110').

While the disclosed embodiments relate to the work vehicle 100 having the loader bucket 220 and the dozer blade 320, it should be understood that any suitable type of attachment may additionally or alternatively be utilized on the work vehicle 100 and controlled via the hydraulic control system 400 (400'). For example, the other attachments may be driven via the cylinders 410 (410'), 420 (420'), and 430 (430'), and/or additional valves, flow paths, and/or cylinders may be provided to enable control of other attachments. It should also be understood that the rotational directions herein (e.g., rotational directions 163, 164, 165, and 166) are given as examples, and other rotational directions may be driven via cylinders and/or valves in other embodiments.

This written description uses examples to describe the present embodiments, including the best mode, and also to enable any person skilled in the art to practice the presently disclosed embodiments, including making and using any devices or systems and performing any incorporated methods. The patentable scope of the presently disclosed embodiments is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A dual mode control system for a work vehicle (100), comprising:
a hydraulic system configured to drive a first attachment (200, 300) and a second attachment (200, 300) configured to couple to the work vehicle (100), comprising:
a hydraulic pump (440, 440') driven by an engine (110, 100') of the work vehicle;
a fluid delivery system (450, 450') comprising a plurality of flow paths fluidly coupled to the hydraulic pump (440, 440') and configured to receive a fluid flow from the hydraulic pump (440, 440');
a valve assembly (470, 470') coupled to the fluid delivery system and configured to regulate diversion of the fluid flow into a first subset of the plurality of flow paths to drive the first attachment (200, 300) and into a second subset of the plurality of flow paths to drive the second attachment (200, 300); and
a controller (490, 490') operably coupled to the valve assembly (470, 470') and the engine (110, 110'), wherein the controller is configured to:
receive an instruction to operate in a first mode to drive the first attachment (200, 300) or to operate in a second mode to drive the second attachment (200, 300); and
in response to the instruction, control the valve assembly (470, 470') to regulate the diversion of the fluid flow, select an operational profile for the engine that defines engine characteristics of the engine, and control the engine (110, 110') in accordance with the operational profile,
the system being **characterized in that** the engine characteristics comprise a torque curve of the engine (110, 110'), an idle point of the engine, a maximum rotational speed setpoint of the engine, a power output rating of the engine, a number of operational cylinders of the engine, or any combination thereof.

2. The dual mode control system of claim 1, wherein the controller (490, 490') is communicatively coupled to a user interface (500, 500') to enable an operator to input the instruction.

3. The dual mode control system of claim 1, wherein, upon receiving the instruction to operate in the first mode, the controller (490, 490') is configured to select the operational profile for the engine that causes the engine to provide an elevated power output.

4. The dual mode control system of claim 3, wherein, upon receiving the instruction to operate in the second mode, the controller (490, 490') is configured to select the operational profile for the engine that causes the engine to provide a reduced power output that is lower than the elevated power output.

5. The dual mode control system of claim 1, wherein the controller (490, 490') is communicatively coupled to a sensor (150, 150'), and the sensor (150, 150') provides the instruction to the controller automatically in response to the first attachment (200, 300) or the second attachment (200, 300) being coupled to the work vehicle.

6. The dual mode control system of claim 1, wherein the operational profile comprises a first engine profile that defines a first set of engine characteristics of the engine or a second engine profile that defines a second set of engine characteristics of the engine different from the first set of engine characteristics of the engine, and wherein the controller (490, 490') is configured to select the first engine profile in response to receiving the instruction to operate in the first mode and to select the second engine profile in response to receiving the instruction to operate in the second mode.

7. The dual mode control system of claim 1, wherein the controller (490, 490') is communicatively coupled to a sensor (150, 150'), the sensor (150, 150') provides a signal indicative of an operational parameter of the work vehicle to the controller, and the controller is configured to adjust engine characteristics of the engine in response to a determination that the operational parameter deviates from a target parameter by a threshold amount.

8. The dual mode control system of claim 7, wherein the operational parameter comprises a flow rate of the fluid flow, a flow pressure of the fluid flow, a rotational speed of one or more wheels (140) of the work vehicle (100), an operational speed of the engine (110, 110'), a ground speed of the work vehicle, a coolant temperature of the engine, an oil temperature of the engine, a fuel consumption rate of the engine, a temperature of an ambient environment surrounding the work vehicle, or any combination thereof.

9. The dual mode control system of claim 1, wherein the controller (490, 490') is configured to:
determine an operating mode of the work vehicle based on an instruction received at the controller, wherein the operating mode comprises a loader mode for operating a loader assembly or a dozer mode for operating a dozer assembly;
control the valve assembly to regulate a fluid flow through a hydraulic system based on the operating mode of the work vehicle;
select an operational profile for the engine based on the operating mode of the work vehicle; and
operate the engine in accordance with the operational profile.

10. The dual mode control system of claim 9, wherein the hydraulic system comprises:
a hydraulic pump (440, 440') driven by the engine of the work vehicle;
a fluid delivery system (450, 450') comprising a plurality of flow paths fluidly coupled to the hydraulic pump and configured to receive the fluid flow from the hydraulic pump (440, 440');
the valve assembly (470, 470') coupled to the fluid delivery system and configured to regulate diversion of the fluid flow into a first subset of the plurality of flow paths to drive the loader assembly and into a second subset of the plurality of flow paths to drive the dozer assembly.

11. The dual mode control system of claim 10, wherein, upon determining that the operating mode comprises the loader mode, the controller (490, 490') is configured to:
regulate the diversion of the fluid flow to the first subset of the plurality of flow paths to drive the loader assembly; and
operate the engine in accordance with a loader engine profile that defines a first set of engine characteristics configured to facilitate operation of the loader assembly.

12. The dual mode control system of claim 11, wherein, upon determining that the operating mode comprises the dozer mode, the controller (490, 490') is configured to:
regulate the diversion of the fluid flow to the second subset of the plurality of flow paths to drive the dozer assembly; and
operate the engine in accordance with a dozer engine profile that defines a second set of engine characteristics configured to facilitate operation of the dozer assembly.

13. The dual mode control system of claim 12, wherein the first and second set of engine characteristics comprise a respective torque curve of the engine, a respective idle point of the engine, a respective maximum rotational speed setpoint of the engine, a respective power output rating of the engine, a respective number of operational cylinders of the engine, or any combination thereof.

14. The dual mode control system of claim 9, wherein the instruction provided to the controller comprises a signal from a sensor (150, 150') of the work vehicle.

## Patentansprüche

1. Dual-Modus-Steuerungssystem für ein Arbeitsfahrzeug (100) mit:
einem hydraulischen System, das dazu eingerichtet ist, eine erste Anbauvorrichtung (200, 300) und eine zweite Anbauvorrichtung (200, 300) anzutreiben, die dazu eingerichtet sind, mit dem Arbeitsfahrzeug (100) verbunden zu werden, umfassend:
eine hydraulische Pumpe (440, 440'), die von einem Motor (110, 110`) des Arbeitsfahrzeugs angetrieben wird;
ein Fluidfördersystem (450, 450') mit einer Mehrzahl von Strömungswegen, die fluidisch mit der hydraulischen Pumpe (440, 440') verbunden sind und die dazu eingerichtet sind, einen Fluidstrom von der hydraulischen Pumpe (440, 440') aufzunehmen;
eine Ventilanordnung (470, 470'), die mit dem Fluidfördersystem verbunden ist und die zum Regeln der Aufteilung des Fluidstroms in einen ersten Teil der Mehrzahl von Strömungswege, um die erste Anbauvorrichtung (200, 300) anzutreiben, und in einen zweiten Teil der Mehrzahl von Strömungswege, um die zweite Anbauvorrichtung (200, 300) anzutreiben, eingerichtet ist; und
eine Steuereinrichtung (490, 490'), die wirkend mit der Ventilanordnung (470, 470') und dem Motor (110, 110') verbunden ist, wobei die Steuereinrichtung dazu eingerichtet ist:
eine Anweisung zu empfangen, um in einem ersten Modus zu wirken, um die erste Anbauvorrichtung (200, 300) anzutreiben, oder in einem zweiten Modus zu wirken, um die zweite Anbauvorrichtung (200, 300) anzutreiben; und
in Reaktion auf die Anweisung, die Ventilanordnung (470, 470') zu steuern, um die Aufteilung des Fluidstroms zu regeln, ein Betriebsprofil des Motors auszuwählen, das Motoreigenschaften des Motors definiert, und den Motor (110, 110') in Übereinstimmung mit dem Betriebsprofil zu steuern,
wobei das System **dadurch gekennzeichnet ist, dass** die Motoreigenschaften eine Drehmomentkurve des Motors (110, 110'), einen Leerlaufpunkt des Motors, einen Maximaldrehzahl-Sollwert des Motors, eine Nennleistung des Motors, eine Zahl der betriebsbereiten Zylinder des Motors oder eine Kombination davon umfassen.

2. Dual-Modus-Steuerungssystem nach Anspruch 1, wobei die Steuereinrichtung (490, 490') kommunizierend mit einer Benutzerschnittstelle (500, 500') verbunden ist, um einem Bediener das Eingeben von Anweisungen zu ermöglichen.

3. Dual-Modus-Steuerungssystem nach Anspruch 1, wobei nach dem Empfangen der Anweisung im ersten Modus zu wirken, die Steuereinrichtung (490, 490') dazu eingerichtet ist, das Betriebsprofil für den Motor auszuwählen, das bewirkt, dass der Motor eine erhöhte Leistungsabgabe bereitstellt.

4. Dual-Modus-Steuerungssystem nach Anspruch 3, wobei nach dem Empfangen der Anweisung im zweiten Modus zu wirken, die Steuereinrichtung (490, 490') dazu eingerichtet ist, das Betriebsprofil für den Motor auszuwählen, das bewirkt, dass der Motor eine reduzierte Leistungsabgabe bereitstellt, die niedriger ist als die erhöhte Leistungsabgabe.

5. Dual-Modus-Steuerungssystem nach Anspruch 1, wobei die Steuereinrichtung (490, 490') kommunizierend mit einem Sensor (150, 150') verbunden ist und der Sensor (150, 150') die Anweisung an die Steuereinrichtung automatisch bereitstellt in Reaktion darauf, dass die erste Anbauvorrichtung (200, 300) oder die zweite Anbauvorrichtung (200, 300) mit dem Arbeitsfahrzeug verbunden ist.

6. Dual-Modus-Steuerungssystem nach Anspruch 1, wobei das Betriebsprofil ein erstes Motorprofil, das einen ersten Teil von Motoreigenschaften des Motors definiert, oder ein zweites Motorprofil aufweist, das einen zweiten Teil von Motoreigenschaften des Motors definiert, der sich von dem ersten Teil von Motoreigenschaften unterscheidet, umfasst und wobei die Steuereinrichtung (490, 490') dazu eingerichtet ist, das erste Motorprofil auszuwählen in Reaktion auf das Empfangen der Anweisung, in dem ersten Modus zu wirken, und das zweite Motorprofil auszuwählen in Reaktion auf das Empfangen der Anweisung, in dem zweiten Modus zu wirken.

7. Dual-Modus-Steuerungssystem nach Anspruch 1, wobei die Steuereinrichtung (490, 490') kommunizierend mit einem Sensor (150, 150') verbunden ist, wobei der Sensor (150, 150') der Steuereinrichtung ein Signal bereitstellt, das kennzeichnend für einen Betriebsparameter des Arbeitsfahrzeugs ist, und wobei die Steuereinrichtung dazu eingerichtet ist, Motoreigenschaften des Motors anzupassen in Reaktion auf eine Bestimmung, dass der Betriebsparameter von einem Zielparameter um eine Grenzmenge abweicht.

8. Dual-Modus-Steuerungssystem nach Anspruch 7, wobei der Betriebsparameter eine Fließrate des Fluidstroms, einen Fließdruck des Fluidstroms, eine Drehgeschwindigkeit von einem oder mehreren Rädern (140) des Arbeitsfahrzeugs (100), eine Betriebsgeschwindigkeit des Motors (110, 110'), eine Geschwindigkeit des Arbeitsfahrzeugs, eine Kühlflüssigkeitstemperatur des Motors, eine Öltemperatur des Motors, eine Kraftstoffverbrauchrate des Motors, eine Temperatur der Umgebung, die das Arbeitsfahrzeug umgibt, oder eine Kombination davon umfasst.

9. Dual-Modus-Steuerungssystem nach Anspruch 1, wobei die Steuereinrichtung (490, 490') dazu eingerichtet ist:
einen Betriebsmodus des Arbeitsfahrzeugs basierend auf einer Anweisung zu bestimmen, die von der Steuereinrichtung empfangen wird, wobei der Betriebsmodus einen Radlader-Modus für den Betrieb einer Radlader-Anordnung oder einen Dozer-Modus für den Betrieb einer Dozer-Anordnung umfasst;
die Ventilanordnung zu steuern, um einen Fluidstrom durch ein hydraulisches System basierend auf dem Betriebsmodus zu regeln;
ein Betriebsprofil für den Motor basierend auf dem Betriebsmodus des Arbeitsfahrzeugs auszuwählen; und
den Motor in Übereinstimmung mit dem Betriebsprofil zu betreiben.

10. Dual-Modus-Steuerungssystem nach Anspruch 9, wobei das hydraulische System umfasst:
eine hydraulische Pumpe (440, 440'), die von dem Motor des Arbeitsfahrzeugs angetrieben wird;
ein Fluidfördersystem (450, 450') mit einer Mehrzahl von Strömungswegen, die fluidisch mit der hydraulischen Pumpe verbunden sind und dazu eingerichtet sind, den Fluidstrom von der hydraulischen Pumpe (440, 440') aufzunehmen;
die Ventilanordnung (470, 470'), die mit dem Fluidfördersystem verbunden ist und zum Regeln der Aufteilung des Fluidstroms in einen ersten Teil der Mehrzahl von Strömungswege, um die Radlader-Anordnung anzutreiben, und in einen zweiten Teil der Mehrzahl von Strömungswege, um die Dozer-Anordnung anzutreiben, eingerichtet ist.

11. Dual-Modus-Steuerungssystem nach Anspruch 10, wobei nach dem Feststellen, dass der Betriebsmodus den Radlader-Modus aufweist, die Steuereinrichtung (490, 490') dazu eingerichtet ist:
die Umleitung des Fluidstroms in den ersten Teil der Mehrzahl von Strömungswege zu regeln, um die Radlader-Anordnung anzutreiben; und
den Motor in Übereinstimmung mit einem Radlader-Motorprofil zu betreiben, das einen ersten Teil von Motoreigenschaften definiert, der dazu eingerichtet ist, den Betrieb der Radlader-Anordnung zu erleichtern.

12. Dual-Modus-Steuerungssystem nach Anspruch 11, wobei nach dem Feststellen, dass der Betriebsmodus den Dozer-Modus aufweist, die Steuereinrichtung (490, 490') dazu eingerichtet ist:
die Umleitung des Fluidstroms in den zweiten Teil der Mehrzahl von Strömungswege zu regeln, um die Dozer-Anordnung anzutreiben; und
den Motor in Übereinstimmung mit einem Dozer-Motorprofil zu betreiben, das einen zweiten Teil von Motoreigenschaften definiert, der dazu eingerichtet ist, den Betrieb der Dozer-Anordnung zu erleichtern.

13. Dual-Modus-Steuerungssystem nach Anspruch 12, wobei der erste und der zweite Teil der Motoreigenschaften eine jeweilige Drehmomentkurve des Motors, einen jeweiligen Leerlaufpunkt des Motors, einen jeweiligen Maximaldrehzahl-Sollwert des Motors, eine jeweilige Nennleistung des Motors, eine jeweilige Zahl der betriebsbereiten Zylinder des Motors oder eine Kombination davon aufweisen.

14. Dual-Modus-Steuerungssystem nach Anspruch 9, wobei die Anweisung, die der Steuereinrichtung bereitgestellt wird, ein Signal von einem Sensor (150, 150') des Arbeitsfahrzeugs aufweist.

## Revendications

1. Système de commande bimodal pour engin de chantier (100), comprenant :
un système hydraulique configuré pour entraîner un premier accessoire (200, 300) et un second accessoire (200, 300) configurés pour se coupler à l'engin de chantier (100), comprenant :
une pompe hydraulique (400, 440') entraînée par un moteur (110, 100') de l'engin de chantier ;
un système de distribution de fluide (450, 450') comprenant une pluralité de chemins d'écoulement couplés fluidiquement à la pompe hydraulique (440, 440') et configurés pour recevoir un débit de fluide de la pompe hydraulique (440, 440') ;
un ensemble de soupapes (470, 470') couplées au système de distribution de fluide et configurées pour réguler la déviation du débit de fluide dans un premier sous-ensemble de la pluralité de chemins d'écoulement pour entraîner le premier accessoire (200, 300) et dans un second sous-ensemble de la pluralité de chemins d'écoulement pour entraîner le second accessoire (200, 300) ; et
un dispositif de commande (490, 490') couplé de manière fonctionnelle à l'ensemble de soupapes (470, 470') et au moteur (110, 110'), dans lequel le dispositif de commande est configuré pour :
recevoir une commande pour fonctionner dans un premier mode pour entraîner le premier accessoire (200, 300) ou pour fonctionner dans un second mode pour entraîner le second accessoire (200, 300) ; et
en réponse à la commande, commander l'ensemble de soupapes (470, 470') pour réguler la déviation du débit de fluide, sélectionner un profil opérationnel pour le moteur qui définit les caractéristiques moteur du moteur, et commander le moteur (110, 110') selon le profil opérationnel,
le système étant **caractérisé en ce que** les caractéristiques moteur comprennent une courbe de couple du moteur (110, 110'), un point de ralenti du moteur, une consigne de vitesse de rotation maximale du moteur, une puissance nominale de sortie du moteur, un nombre de cylindres opérationnels du moteur, ou toute combinaison de ceux-ci.

2. Système de commande bimodal selon la revendication 1, dans lequel le dispositif de commande (490, 490') est couplé en communication à une interface utilisateur (500, 500') pour permettre à un opérateur de saisir la commande.

3. Système de commande bimodal selon la revendication 1, dans lequel, à la réception de la commande pour fonctionner dans le premier mode, le dispositif de commande (490, 490') est configuré pour sélectionner le profil d'opération du moteur qui permet au moteur de fournir une puissance de sortie élevée.

4. Système de commande bimodal selon la revendication 3, dans lequel, à la réception de la commande pour fonctionner dans le second mode, le dispositif de commande (490, 490') est configuré pour sélectionner le profil opérationnel du moteur qui permet au moteur de fournir une puissance de sortie réduite inférieure à la puissance de sortie élevée.

5. Système de commande bimodal selon la revendication 1, dans lequel le dispositif de commande (490, 490') est couplé en communication à un capteur (150, 150'), et le capteur (150, 150') fournit automatiquement la commande au dispositif de commande en réponse au couplement du premier accessoire (200, 300) ou du second accessoire (200, 300) à l'engin de chantier.

6. Système de commande bimodal selon la revendication 1, dans lequel le profil opérationnel comprend un premier profil de moteur qui définit un premier ensemble de caractéristiques moteur du moteur ou un second profil de moteur qui définit un second ensemble de caractéristiques moteur différentes du premier ensemble de caractéristiques moteur du moteur, et dans lequel le dispositif de commande (490, 490') est configuré pour sélectionner le premier profil de moteur en réponse à la réception de la commande de fonctionner dans le premier mode et pour sélectionner le second profil de moteur en réponse à la réception de la commande de fonctionner dans le second mode.

7. Système de commande bimodal selon la revendication 1, dans lequel le dispositif de commande (490, 490') est couplé en communication à un capteur (150, 150'), le capteur (150, 150') émet un signal indicatif d'un paramètre de fonctionnement de l'engin de chantier au dispositif de commande, et le dispositif de commande est configuré pour ajuster les caractéristiques moteur du moteur en réponse à une détermination que le paramètre de fonctionnement s'écarte d'un paramètre cible d'une quantité seuil.

8. Système de commande bimodal selon la revendication 7, dans lequel le paramètre de fonctionnement comprend un flux du débit de fluide, une pression d'écoulement du débit de fluide, une vitesse de rotation d'une ou de plusieurs roues (140) de l'engin de chantier (100), une vitesse de fonctionnement du moteur (110, 110'), une vitesse au sol de l'engin de chantier, une température de liquide de refroidissement du moteur, une température de l'huile du moteur, un taux de consommation de carburant du moteur, une température d'un environnement ambiant entourant l'engin de chantier, ou une combinaison de ceux-ci.

9. Système de commande bimodal selon la revendication 1, dans lequel le dispositif de commande (490, 490') est configuré pour :
déterminer un mode de fonctionnement de l'engin de chantier sur la base d'une commande reçue au dispositif de commande, dans lequel le mode de fonctionnement comprend un mode chargeur pour faire fonctionner un ensemble de chargement ou un mode bouteur pour faire fonctionnement un ensemble bouteur ;
commander l'ensemble de soupapes pour réguler un débit de fluide à travers un système hydraulique sur la base du mode de fonctionnement de l'engin de chantier ;
sélectionner un profil opérationnel pour le moteur sur la base du mode de fonctionnement de l'engin de chantier ; et
faire fonctionner le moteur selon le profil opérationnel.

10. Système de commande bimodal selon la revendication 9, dans lequel le système hydraulique comprend :
une pompe hydraulique (440, 440') entraînée par le moteur de l'engin de chantier ;
un système de distribution de fluide (450, 450') comprenant une pluralité de chemins d'écoulement couplés fluidiquement à la pompe hydraulique et configurés pour recevoir un débit de fluide de la pompe hydraulique (440, 440') ;
l'ensemble de soupapes (470, 470') couplées au système de distribution de fluide et configurées pour réguler la déviation du débit de fluide dans un premier sous-ensemble de la pluralité de chemins d'écoulement pour entraîner l'ensemble de chargement et dans un second sous-ensemble de la pluralité de chemins d'écoulement pour entraîner l'ensemble bouteur.

11. Système de commande bimodal selon la revendication 10, dans lequel, en déterminant que le mode de fonctionnement comprend le mode chargeur, le dispositif de commande (490, 490') est configuré pour :
réguler la déviation du débit de fluide vers le premier sous-ensemble de la pluralité de chemins d'écoulement pour entraîner l'ensemble de chargement ; et
faire fonctionner le moteur selon un profil de moteur de charge qui définit un premier ensemble de caractéristiques moteur configurées pour faciliter le fonctionnement de l'ensemble de chargement.

12. Système de commande bimodal selon la revendication 11, dans lequel, en déterminant que le mode de fonctionnement comprend le mode bouteur, le dispositif de commande (490, 490') est configuré pour :
réguler la déviation du débit de fluide vers le second sous-ensemble de la pluralité de chemins d'écoulement pour entraîner l'ensemble bouteur ; et
faire fonctionner le moteur selon un profil de moteur bouteur qui définit un second ensemble de caractéristiques moteur configurées pour faciliter le fonctionnement de l'ensemble bouteur.

13. Système de commande bimodal selon la revendication 12, dans lequel le premier et le second ensemble de caractéristiques moteur comprennent une courbe de couple respective du moteur, un point de ralenti respectif du moteur, une consigne de vitesse de rotation maximale respective du moteur, une puissance nominale de sortie respective du moteur, un nombre de cylindres opérationnels respectif du moteur, ou toute combinaison de ceux-ci.

14. Système de commande bimodal selon la revendication 9, dans lequel la commande fournie au dispositif de commande comprend un signal d'un capteur (150, 150') de l'engin de chantier.
